Europäisches Patentamt

European Patent Office

Office européen des brevets

(19)

(11) Veröffentlichungsnummer: **0 337 237**
**A1**

(12) EUROPÄISCHE PATENTANMELDUNG

(21) Anmeldenummer: 89105827.3

(22) Anmeldetag: 03.04.89

(51) Int. Cl.⁴: **C08K 5/04** , **C08L 27/06** ,
//(C08K5/04,5:09,5:09,5:10,5:15)

(30) Priorität: 11.04.88 DE 3812014

(43) Veröffentlichungstag der Anmeldung:
18.10.89 Patentblatt 89/42

(84) Benannte Vertragsstaaten:
AT BE CH DE ES FR GB IT LI NL SE

(71) Anmelder: NEYNABER CHEMIE GmbH
Am Wedenberg Postfach 11 20
D-2854 Loxstedt(DE)

(72) Erfinder: Worschech, Kurt, Dr.
Alte Strasse 4
D-2854 Loxstedt(DE)
Erfinder: Wedl, Peter
Löningstrasse 13
D-2850 Bremerhaven(DE)
Erfinder: Brand, Ernst-Udo
Allersstrasse 18
D-2850 Bremerhaven(DE)
Erfinder: Fleischer, Erwin
Dwarsweg 1
D-2858 Schiffdorf(DE)

(54) Stabilisatorkombination für Ca/Zn-stabilisierte PVC-Formmassen, PVC-Formmassen sowie Verfahren zu deren Herstellung.

(57) Eine Stabilisatorkombination für Ca/Zn-stabilisierte, transparente bis glasklare PVC-Formmassen, enthaltend Ca-Salze von $C_8$-$C_{34}$-Fettsäuren, Zn-Salze von $C_8$-$C_{18}$-Fettsäuren, epoxidierte $C_{16}$-$C_{22}$-Fettsäureglyceride sowie Diester des Ethylenglykols mit $C_{16}$-$C_{18}$-Fettsäuren ergibt eine Stabilisierung, die der bisher mit gehärteten Ricinusölen erreichten vergleichbar oder überlegen ist.

EP 0 337 237 A1

## Stabilisatorkombination für Ca/Zn-stabilisierte PVC-Formmassen, PVC-Formmassen sowie Verfahren zu deren Herstellung

Die Erfindung betrifft eine Stabilisatorkombination für Ca/Zn-stabilisierte PVC-Formmassen, die genannte Stabilisatorkombination enthaltende Ca/Zn-stabilierte PVC-Formmassen sowie Verfahren zur Herstellung von Ca/Zn-stabilisierten PVC-Formmassen.

PVC-Formmassen für Wasserflaschen, insbesondere für sogenannte stille Wässer und $CO_2$-haltige Wässer, werden aus organoleptischen Gründen mit Ca- und Zn-Seifen und epoxidierten Triglyceriden, insbesondere epoxidiertem Sojabohnenöl, stabilisiert. Da die stabilisierende Wirkung von CaZn-Systemen nicht sehr ausgeprägt ist, werden zusätzliche Costabilisatoren, z.B. 1,3-Diketone und/oder Derivate des Dihydropyridins, benötigt.

Derartige PVC-Rezepturen stellen auch hohe Anforderungen an das rheologische Verhalten der Formmasse. Während des Aufschmelzvorgangs im Extruder muß die Formmasse vor Friktion geschützt werden. Auch während der thermischen Homogenisierung im Schneckenzylinder muß ein gleichmäßiger Fluß gewährleistet sein. Im Zylinder und während des Durchströmens durch das Werkzeug dürfen keine Friktionsspitzen auftreten. Hinzu kommt, daß die für die Formung der Flaschen erforderlichen Blasvorgänge oft mit hohem Materialdurchsatz ablaufen. Stundenleistungen von 400 bis 500 kg sind keine Seltenheit; sie sind dann jedoch mit hohen thermischen und rheologischen Anforderungen an die Rezeptur der Blasmassen verbunden. Um Beschädigungen beim Transport der gefüllten Flaschen zu vermeiden, ist zudem eine Schlagzähkeitsmodifizierung des PVC-Materials erforderlich, z.B. durch Zusätze von Methylacrylat/Butadien/Styrol-Harzen. Diese Zusätze erhöhen die Schmelzviskosität der PVC-Masse, so daß die Anforderungen an Stabilität und Fließfähigkeiten nochmals erhöht werden.

In derartigen PVC-Rezepturen werden Derivate der Montansäure oder hochmolekulare Mehrkomponenten-Fettsäureester und/oder oxidierte Polyethylenwachse eingesetzt. Diese Additive können jedoch nur in niedriger Dosierung verwendet werden, weil sie sonst mit der Rezeptur nicht verträglich sind und zu Eintrübungen des Flaschenmaterials führen. Die hierfür eingesetzten, geringen Additivmengen reichen jedoch nicht aus, um das gewünschte rheologische Verhalten der Blasmassen einzustellen. Es werden daher noch zusätzliche sogenannte interne Gleitmittel benötigt, die auch bei höherer Dosierung (1,0 bis 2,0 Gew.-Teile pro 100 Gew.-Teile PVC-Masse) die Transparenz der Flaschen nicht negativ beeinflussen. Als Gleitmittel der Wahl wird hier hydriertes Ricinusöl - das Triglycerid der 12-Hydroxystearinsäure - eingesetzt. Wegen des hohen Schmelzpunktes (ca. 85° C) des Ricinusderivats wird die Rieselfähigkeit einer trockenen PVC-Mischung nicht gestört. Die freien Hydroxylgruppen in den Fettsäureresten gewährleisten eine hervorragende Verträglichkeit des Moleküls in PVC auch bei höheren Dosierungen.

Ein großer Nachteil des hydrierten Ricinusöls ist dadurch begründet, daß der Preis des Ricinusöls in Abhängigkeit von den jeweiligen Ernteergebnissen starken Schwankungen unterworfen ist. Es sind daher zahlreiche Versuche unternommen worden, gehärtetes Ricinusöl in PVC-Massen der oben genannten Art durch andere Gleitmittel zu ersetzen. Diese Versuche sind jedoch bisher gescheitert, weil Austauschprodukte für gehärtetes Ricinusöl entweder zu teuer oder zu schlecht in ihrer Wirkung als Gleitmittel waren. Es ist zwar gelungen, ein weitgehend ähnliches Produkt durch Hydrierung epoxidierter Öle herzustellen, wobei eine Hydroxygruppe in der 9- bzw. 10-Stellung der Säurekette entsteht; diese Produkte sind jedoch für die industrielle Anwendung viel zu teuer. Andere Triglyceride wie Glycerin-tristearat, die preislich mit hydrierten Ricinusöl vergleichbar wären, sind mit PVC-Formmassen der oben genannte Art zu unverträglich und trüben bereits in relativ niedriger Dosierung das Flaschenmaterial ein. Besser geeignete Produkte, z.B. Partialglyceride der 12-Hydroxystearinsäure oder Dioctadecylphtalat, sind zu teuer. Auch die in der DE-OS 1 943 082 beschriebene Ca/Zn-Stabilisierung in Gegenwart von Diethylenglykoldiestern ist unzureichend bzw. ergibt keine Formmassen hoher Transparenz.

Somit ist die Erfindung auf eine Stabilisatorkombination mit einem Gehalt an einem internen Gleitmittel gerichtet, das in seiner Wirkung derjenigen des gehärteten Ricinusöls mindestens gleichwertig ist und gegenüber diesem den Vorteil aufweist, daß es industriell herstellbar und daher den oben genannten Preisschwankungen nicht unterworfen ist.

Diese Aufgabe wird durch eine Stabilisatorkombination für Ca/Zn-stabilisierte PVC-Formmassen gelöst, die die folgenden Komponenten enthält:

a) Ca-Salze von gesättigten, geradkettigen $C_8$-$C_{34}$-Fettsäuren,

b) Zn-Salze von gesättigten, geradkettigen oder verzweigten $C_8$-$C_{18}$-Fettsäuren,

c) epoxidierte Glyceride von ungesättigten geradkettigen $C_{16}$-$C_{22}$-Fettsäuren mit Oxiranzahlen von 6 bis 8 und Jodzahlen von weniger als 5, und

d) Diester des Ethylenglykols mit gesättigten, geradkettigen $C_{16}$-$C_{18}$-Fettsäuren.

Zu den vorgenannten $C_8$-$C_{34}$-Fettsäuren gehören Capryl-, Caprin-, Laurin-, Myristin-, Palmitin-, Stearin-, Behen- und Montansäure; zu den vorgenannten $C_8$-$C_{18}$- bzw. $C_{16}$-$C_{18}$-Fettsäuren gehören die Fettsäuren aus der obigen Aufstellung mit entsprechender Anzahl der Kohlenstoffatome. Typische Beispiele für ungesättigte, geradkettige $C_{16}$-$C_{22}$-Fettsäuren sind Öl-, Petroselin-, Palmitolein- und Erucasäure. Wie in der Fettchemie üblich, werden diese Fettsäuren in Form ihrer technischen Gemische eingesetzt, die aus natürlichen Rohstoffen tierischer oder pflanzlicher Herkunft gewonnen werden, z.B. aus Kokos-, Palmkern-, Raps- und Rübsenöl sowie Rinder- und Schweinetalg.

Gemäß einer vorteilhaften Ausführungsform der Erfindung enthalten die Calciumsalze von gesättigten, geradkettigen $C_8$-$C_{34}$-Fettsäuren
Partialester gesättigter, geradkettiger $C_{12}$-$C_{34}$-Monocarbonsäuren mit 2 oder mehr als 2 Kohlenstoffatome und 2 oder mehr als 2 Hydroxygruppen enthaltenden Polyolen, die im Zahlenmittel mindestens eine freie Hydroxylgruppe aufweisen,
und/oder
Komplexester aus
    I) aliphatischen, cycloaliphatischen und/oder aromatischen Dicarbonsäuren mit 2 bis 22 Kohlenstoffatomen im Molekül,
    II) aliphatischen Polyolen mit 2 bis 6 Hydroxylgruppen im Molekül und
    III) aliphatischen Monocarbonsäuren mit 12 bis 34 Kohlenstoffatomen im Molekül,
in denen das Molverhältnis der Komponenten I, II und III zueinander etwa
$n - 1 : n : nm - 2 (n - 1)$
beträgt, wobei n eine ganze Zahl von 2 bis 11 und m die OH-Funktionalität des Polyols darstellt,
in Gewichtsverhältnissen von Ca-Salzen zu Partialestern und/oder Komplexestern bis zu 1:4, insbesondere von 1:0,5 bis 1:4.

Die oben genannten Ca-Salze können durch Umsetzung von Calciumoxid, Calciumhydroxid oder Calciumcarbonat mit den entsprechenden Fettsäuren in den genannten Partialestern und/oder Komplexestern hergestellt worden sein.

Zu den hier in Zusammenhang mit Partialestern genannten Polyolen mit 2 oder mehr als 2 Kohlenstoffatomen und 2 oder mehr als 2 Hydroxylgruppen gehören z.B. solche mit maximal 15 Kohlenstoffatomen, insbesondere Ethylenglykol, Glycerin, Trimethylolpropan, Pentaerythrit, Diglycerin, Triglycerin, Di-trimethylolpropan, Di-pentaerythrit und dergleichen; besonders bevorzugt ist Pentaerythrit-distearat.

Die ebenfalls einsetzbaren Komplexester sind in der DE-A 19 07 768 erläutert.

Die in der Stabilisatorkombination der Erfindung enthaltenen epoxidierten Glyceride von ungesättigten geradkettigen $C_{16}$-$C_{22}$-Fettsäuren mit Oxiranzahlen von 6 bis 8 und Jodzahlen von weniger als 5 sind bei Umgebungstemperatur flüssig; sie sind z.B. als epoxidiertes Sojabohnenöl handelsübliche Produkte.

Weiterhin wird in der Stabilisatorkombination der Erfindung ein Diester des Ethylenglykols mit technischen Palmitin-/Stearinsäure-Schnitten (ca. 1:1) eingesetzt. Da das Ethylenglykol-dipalmitat eine bessere Transparenz der PVC-Formmassen ergibt, kann es jedoch in denjenigen Fällen, in denen eine höhere Konzentration an Ethylenglykoldiestern erforderlich ist, vorteilhaft sein, die Ester des Ethylenglykols mit gereinigter Palmitinsäure (ca. 90 % Palmitinsäuregehalt) einzusetzen, insbesondere bei Ethylenglykoldiester-Gehalten von mehr als 1,5 Gew.-Teilen auf 100 Gew.-Teile PVC.

Eine besonders vorteilhafte Stabilisatorkombination der Erfindung ist durch folgende Zusammensetzung gekennzeichnet:
    a) 1 bis 16, insbesondere 4 bis 10 Gew.-Teile der Ca-Salze von gesättigten, geradkettigen $C_{18}$-$C_{34}$-Fettsäuren, die gegebenfalls die Partialester und/oder Komplexester in Gewichtsverhältnissen bis zu 1:4 enthalten,
    b) 0,6 bis 4,0, insbesondere 1,2 bis 2,4 Gew.-Teile der Zn-Salze von gesättigten, geradkettigen oder verzweigten $C_8$-$C_{18}$-Fettsäuren,
    c) 40 bis 160, insbesondere 60 bis 120 Gew.-Teile der epoxidierten Glyceride von ungesättigten geradkettigen $C_{16}$-$C_{22}$-Fettsäuren,
    d) 10 bis 50, insbesondere 20 bis 40 Gew.-Teile der Diester des Ethylenglykols mit gesättigten, geradkettigen $C_{16}$-$C_{18}$-Fettsäuren,
sowie gegebenenfalls
    e) 10 bis 40, insbesondere 16 bis 30 Gew.-Teile der Fließverbesserer auf Basis von Methacrylsäureestern,
    f) 0 bis 300 Gew.-Teile Schlagzähigkeitsverbesserer auf Basis von Methacrylat/Butadien/Styrol-Mischpolymerisaten,

g) 2 bis 10 Gew.-Teile übliche Costabilisatoren, und/oder

h) 0 bis 6,0 Gew.-Teile oxidiertes Polyethylen.

Die Erfindung betrifft weiterhin Ca/Zn-stabilisierte, transparente bis glasklare PVC-Formmassen, enthaltend auf jeweils 100 Gew.-Teile Suspensions- oder Masse-PVC mit K-Werten von 55 bis 63

a) 0,05 bis 0,8, insbesondere 0,1 bis 0,5 Gew.-Teile Ca-Salze von gesättigten geradkettigen $C_8$-$C_{34}$-Fettsäuren, berechnet als Ca-behenat,

b) 0,03 bis 0,2, insbesondere 0,06 bis 0,12 Gew.-Teile Zn-Salze von geradkettigen oder verzweigten, gesättigten $C_8$-$C_{18}$-Fettsäuren, berechnet als Zn-octoat,

c) 2 bis 8, insbesondere 3 bis 6 Gew.-Teile epoxidierte Glyceride von ungesättigten geradkettigen $C_{16}$-$C_{22}$-Fettsäuren mit Oxiranzahlen zwischen 6 und 8 und Jodzahlen von weniger als 5, und

d) 0,5 bis 2,5, insbesondere 1,0 bis 2,0 Gew.-Teile Diester des Ethylenglykols mit gesättigten, geradkettigen $C_{16}$-$C_{18}$-Fettsäuren,

wobei die Ca-Salze gegebenfalls Partialester gesättigter, geradkettiger $C_{12}$-$C_{34}$-Monocarbonsäuren mit 2 oder mehr als 2 Kohlenstoffatomen und 2 oder mehr als 2 Hydroxylgruppen enthaltenden Polyolen, die im Zahlenmittel mindestens eine freie Hydroxylgruppe aufweisen und/oder Komplexester aus

I) aliphatischen, cycloaliphatischen und/oder aromatischen Dicarbonsäuren mit 2 bis 22 Kohlenstoffatomen im Molekül,

II) aliphatischen Polyolen mit 2 bis 6 Hydroxylgruppen im Molekül und

III) aliphatischen Monocarbonsäuren mit 12 bis 34 Kohlenstoffatomen im Molekül,

in denen das Molverhältnis der Komponenten I, II und III zueinander etwa

$$n - 1 : n : nm - 2 (n - 1)$$

beträgt, wobei n eine ganze Zahl von 2 bis 11 und m die OH-Funktionalität des Polyols darstellt, in Gewichtsverhältnissen von Ca-Salze zu Partialestern und/oder Komplexestern bis zu 1:4 insbesondere von 1:0,5 bis 1:4, enthalten.

Gemäß einer weiteren vorteilhaften Ausführungsform der Erfindung können die Ca/Zn-stabilisierten, transparenten bis glasklaren PVC-Formmassen die folgenden Zusätze enthalten:

e) 0,5 bis 2,0, insbesondere 0,8 bis 1,5 Gew.-Teile Fließverbesserer auf Basis von Methacrylsäureestern,

f) 0 bis 15 Gew.-Teile Schlagzähigkeitsverbesserer auf Basis von Methacrylat/Butadien/Styrol-Mischpolymerisaten,

g) 0,1 bis 0,5 Gew.-Teile übliche Costabilisatoren für Ca/Zn-stabilisierte PVC-Formmassen und/oder

h) 0 bis 0,3 Gew.-Teile oxidiertes Polyethylen.

Die vorgenannten Fließverbesserer (flow promotor) und Schlagzähigkeitsverbesserer (high impact modifier) sind die in der PVC-Verarbeitung üblichen, wobei die Schlagzähigkeitsverbesserer entfallen, wenn die PVC-Formmassen der Erfindung im Streckblasverfahren verarbeitet werden.

Für die PVC-Formmassen geeignete Costabilisatoren sind insbesondere 1,3-Diketone gemäß DE-AS 26 00 516, DE-AS 27 28 862 und DE-AS 27 28 865, alpha-Ketoenolester gemäß FR-PS 2 383 987, alpha-Acyllactone gemäß DE-AS 26 45 870, substituierte 1,4-Dihydro-pyridindicarbonsäuren-(3,5) gemäß DE-AS 24 36 007 sowie gegebenenfalls in 1-, 2- und/oder 3-Stellung substituierte Pyrrolverbindungen gemäß EP-A 0 022 087.

Das gegebenenfalls zuzusetzende oxidierte Polyethylen dient als Glanzgeber für die Formmassen sowie zur Verbesserung der Dauerlaufeigenschaften derselben und ist ein handelsübliches, als PVC-Additiv bekanntes Produkt.

Die Erfindung betrifft weiterhin ein Verfahren zur Herstellung von Ca/Zn-stabilisierten, transparenten bis glasklaren PVC-Formmassen, das dadurch gekennzeichnet ist, daß man in 100 Gew.-Teile Suspensions- oder Masse-PVC mit K-Werten von 55 bis 63 die folgenden Zusätze einarbeitet:

a) 0,05 bis 0,8, insbesondere 0,1 bis 0,5 Gew.-Teile Ca-Salze geradkettiger, gesättigter $C_8$-$C_{34}$-Fettsäuren, berechnet als Ca-behenat,

b) 0,03 bis 0,2, insbesondere 0,06 bis 0,12 Gew.-Teile Zn-Salze von geradkettigen oder verzweigten, gesättigten $C_8$-$C_{18}$-Fettsäuren, berechnet aus Zn-Octoat,

c) 2 bis 8, insbesondere 3 bis 6 Gew.-Teile epoxidierte Glyceride von ungesättigten geradkettigen $C_{16}$-$C_{22}$-Fettsäuren mit Oxiranzahlen von 6 bis 8 und Jodzahlen von weniger als 5 und

4

d) 0,5 bis 2,5, insbesondere 1,0 bis 2,0 Gew.-Teile Diester des Ethylenglykols gesättigten, geradkettigen mit $C_{16}$-$C_{18}$-Fettsäuren,

wobei die Ca-Salze gegebenenfalls Partialester gesättigter, geradkettiger $C_{12}$-$C_{34}$-Monocarbonsäuren mit 2 oder mehr als 2 Kohlenstoffatome und 2 oder mehr als 2 Hydroxylgruppen enthaltenden Polyolen, die im Zahlenmittel mindestens eine freie Hydroxylgruppe aufweisen, und/oder Komplexester aus

I) aliphatischen, cycloaliphatischen und/oder aromatischen Dicarbonsäuren mit 2 bis 22 Kohlenstoffatomen im Molekül,

II) aliphatischen Polyolen mit 2 bis 6 Hydroxylgruppen im Molekül und

III) aliphatischen Monocarbonsäuren mit 12 bis 34 Kohlenstoffatomen im Molekül,

in denen das Molverhältnis der Komponenten I, II und III zueinander etwa

n - 1 : n : nm - 2 (n - 1)

beträgt, wobei n eine ganze Zahl von 2 bis 11 und m die OH-Funktionalität des Polyols darstellt,

in Gewichtsverhältnissen von Ca-Salze zu Partialestern und/oder Komplexen bis zu 1:4, insbesondere von 1:0,5 bis 1:4, enthalten.

Gegebenenfalls können weiterhin die folgenden Zusätze eingearbeitet werden:

e) 0,5 bis 2,0, insbesondere 0,8 bis 1,5 Gew.-Teile Fließverbesserer auf Basis von Methacrylsäureestern,

f) 0 bis 15 Gew.-Teile Schlagzähigkeitsverbesserer auf Basis von Methacrylat/Butadien/Styrol-Mischpolymerisaten,

g) 0,1 bis 0,5 Gew.-Teile übliche Costabilisatoren und/oder

h) 0 bis 0,3 Gew.-Teile oxidiertes Polyethylen.

Die Erfindung wird im folgenden anhand von bevorzugten Ausführungsbeispielen näher erläutert.

A. Herstellung einer PVC-Formmasse ohne Schlagzähighkeitsverbesserer (= Grundansatz A).

Durch mechanisches Vermischen der im folgenden aufgeführten Einzelbestandteile in einem Heiz/Kühlmischer bei 115 bis 120° C wurde die folgende Zusammensetzung erhalten:

100 Gew.-Teile Suspensions-PVC, K-Wert 58

1 Gew.-Teil Fließverbesserer auf Basis von Methacrylsäureester

5 Gew.-Teile desodoriertes Epoxysojabohnenöl

0,08 Gew.-Teile basisches Zn-octoat

0,3 Gew.-Teile Calciumstearat

0,3 Gew.-Teile Stearoyl-benzoyl-methan

0,5 Gew.-Teile einer Calciumseife, bestehend aus 25 Gew.-% Ca-behenat, 50 Gew.-% Pentaerythrit-adipat-stearat (7:6:16) und 25 Gew.-% Glycerin-monobehenat

0,1 Gew.-Teile oxidiertes Polyethylenwachs.

B. Herstellung einer PVC-Formmasse mit Schlagzähigkeitsverbesserer (= Grundansatz B).

Die Herstellung und Rezeptur waren wie unter A beschrieben, jedoch unter Zusatz von 10 Gew.-Teilen eines handelsüblichen Schlagzähigkeitsverbesserers auf Basis eines Methacrylat/Butadien/Styrol-Mischpolymerisats.

Beispiel 1.

Dem Grundansatz A wurden 1,5 Gew.-Teile Ethylenglykol-di-stearat (Stearat : Palmitat ca. 1 : 1) zugesetzt, anschließend wurde der Mischvorgang bei 115 bis 120° C wiederholt.

Beispiel 2.

Dem Grundansatz A wurden in der in Beispiel 1 beschriebenen Weise 1,5 Gew.-Teile Ethylenglykol-di-palmitat (90 % Palmitat) zugemischt.

Beispiel 3.

Dem Grundansatz B wurden in der in Beispiel 2 beschriebenen Weise 1,5 Gew.-Teile Ethylenglykol-distearat (Stearat : Palminat ca. 1 : 1) zugemischt.

Beispiel 4.

Dem Grundansatz B wurden in der in Beispiel 2 beschriebenen Weise 1,5 Gew.-Teile Ethylenglykol-dipalmitat (90 % Palmitat) zugemischt.

Vergleichsbeispiele I, II.

Dem Grundansatz A bzw. B wurden in der in Beispiel 1 beschriebenen Weise jeweils 1,5 Gew.-Teile handelsübliches, gehärtetes Ricinusöl zugesetzt.

Die erhaltenen PVC-Formmassen wurden zur Ermittlung der statischen Stabilität auf einem Laborwalzwerk der Abmessung 450 x 220 mm (Fa. Berstorff) bei einer Walzentemperatur von 170°C und einer Walzendrehzahl von 12,5 U/min in Gleichlauf im Verlauf von 5 min zu Prüffellen verarbeitet. Die ca. 0,5 mm dicken Felle wurden zu quadratischen Probestücken mit 10 mm Kantenlänge zerschnitten, welche anschließend in einen Trockenschrank mit 6 rotierenden Horden (Heraeus FT 420 R) einer Temperatur von 180°C ausgesetzt wurden. Im Abstand von 15 min wurden Proben entnommen und deren Farbänderung begutachtet.

In der Tabelle 1 ist für jede Formmasse zunächst unter "Anfangsstabilität" die Zeit angegeben, nach der die Proben eine deutliche Verfärbung zeigten. Unter "Stabilitätsabbruch" ist die Zeit angegeben, nach der der Test wegen zu starker Verfärbung abgebrochen wurde. Im übrigen waren alle Proben vor Beginn der thermischen Behandlung ganz leicht gelblich gefärbt.

Zur Bestimmung der dynamischen Walzstabilität wurden jeweils 220 g der erhaltenen Formmassen auf dem oben beschriebenen Walzwerk bei einer Walzentemperatur von 200°C zu einem umlaufenden Fell ausgewalzt und das Fell solange weiter bearbeitet, bis die Formmasse fest auf der Oberfläche einer Walze haften blieb bzw. verbrannt war. Die Spaltbreite zwischen den Walzen war dabei so eingestellt, daß die Dicke der umlaufenden Felle jeweils 0,5 mm betrug. Für die Ermittlung der Anfangsfarbe erfolgte alle 2 min eine Probenentnahme.

In der Tabelle 2 ist zunächst für jede Formmasse die Zeit angebeben, nach der die erste Verfärbung der in allen Fällen ganz leicht gelblichen Anfangsfarbe beobachtet wurde (Anfangsstabilität), anschließend die Zeit der Klebfreiheit.

Tabelle 1

| Statische Thermostabilität | | |
|---|---|---|
| Beispiel (Formmasse) | Anfangsstabilität (min) | Stabilitätsabbruch (min) |
| A | 30 | 105 |
| B | 45 | 120 |
| 1 | 45 | 105 |
| 2 | 45 | 105 |
| 3 | 45 | 120 |
| 4 | 45 | 120 |
| Vergleich I | 45 | 105 |
| Vergleich II | 45 | 120 |

Tabelle 2

| Dynamische Walzstabilität | | |
|---|---|---|
| Beispiel (Formmasse) | Anfangsstabilität (min) | Klebfreiheit (min) |
| A | 6 | 21 [1] |
| B | 10 | 28 [1] |
| 1 | 8 | 21 [1] |
| 2 | 8 | 20 [1] |
| 3 | 12 | 30 |
| 4 | 12 | 30 |
| Vergleich I | 8 | 20 [1] |
| Vergleich II | 12 | 26 [1] |

1) verbrannt

Bei allen Tests zeigt sich, daß die erfindungsgemäßen PVC-Formmassen gemäß den Beispielen 1 bis 4 bessere Werte hinsichtlich Anfangsstabilität und Stabilitätsabbruch bzw. Klebfreiheit zeigen als die Grundmischungen A und B; gegenüber den Vergleichsbeispielen I und II sind sie gleich gut, bzw. sogar etwas besser. Hervorzuheben ist weiterhin, daß auch die Transparenzeigenschaften der Formmassen gemäß den Beispielen 1 und 3 ebenso gut sind wie bei den Vergleichsbeispielen I und II, bei den Beispielen 2 und 4 sogar merklich besser.

## Ansprüche

1. Stabilisatorkombination für Ca/Zn-stabilisierte PVC-Formmassen, enthaltend
   a) Ca-Salze von gesättigten, geradkettigen $C_8$-$C_{34}$-Fettsäuren,
   b) Zn-Salze von gesättigten, geradkettigen oder verzweigten $C_8$-$C_{18}$-Fettsäuren,
   c) epoxidierte Glyceride von ungesättigten geradkettigen $C_{16}$-$C_{22}$-Fettsäuren mit Oxiranzahlen von 6 bis 8 und Jodzahlen von weniger als 5 sowie
   d) Diester des Ethylenglykols mit gesättigten, geradkettigen $C_{16}$-$C_{18}$-Fettsäuren.

2. Stabilisatorkombination nach Anspruch 1, dadurch gekennzeichnet, daß die Ca-Salze von $C_8$-$C_{34}$-Fettsäuren Partialester gesättigter, geradkettiger $C_{12}$-$C_{34}$-Monocarbonsäuren mit 2 oder mehr als 2 Kohlenstoffatome und 2 oder mehr als 2 Hydroxylgruppen enthaltenden Polyolen, die im Zahlenmittel mindestens eine freie Hydroxylgruppe aufweisen, und/oder Komplexester aus

I) aliphatischen, cycloaliphatischen und/oder aromatischen Dicarbonsäuren mit 2 bis 22 Kohlenstoffatomen im Molekül,
II) aliphatischen Polyolen mit 2 bis 6 Hydroxylgruppen im Molekül und
III) aliphatischen Monocarbonsäuren mit 12 bis 34 Kohlenstoffatomen im Molekül,
in denen das Molverhältnis der Komponenten I, II und III zueinander etwa

n - 1 : n : nm - 2 (n - 1)

beträgt, wobei n eine ganze Zahl von 2 bis 11 und m die OH-Funktionalität des Polyols darstellt, in Gewichtsverhältnissen von Ca-Salzen zu Partialestern und/oder Komplexestern bis zu 1:4, insbesondere von 1:0,5 bis 1:4, enthalten.

3. Stabilisatorkombination nach Anspruch 1 oder 2, gekennzeichnet durch die Zusammensetzung
   a) 1 bis 16, insbesondere 2 bis 10 Gew.-Teile der Ca-Salze von gesättigten, geradkettigen $C_{18}$-$C_{34}$-Fettsäuren, die gegebenenfalls die Partialester und/oder Komplexester in Gewichtsverhältnissen bis zu 1:4, insbesondere von 1:0,5 bis 1:4, enthalten,
   b) 0,6 bis 4,0, insbesondere 1,2 bis 2,4 Gew.-Teile der Zn-Salze von gesättigten, geradkettigen oder verzweigten $C_8$-$C_{18}$-Fettsäuren,
   c) 40 bis 160, insbesondere 60 bis 120 Gew.-Teile der epoxidierten Glyceride von ungesättigten geradkettigen $C_{16}$-$C_{22}$-Fettsäuren,
   d) 10 bis 50, insbesondere 20 bis 40 Gew.-Teile der Diester des Ethylenglykols mit gesättigten, geradkettigen $C_{16}$-$C_{18}$-Fettsäuren,
sowie gegebenenfalls

e) 10 bis 40, insbesondere 16 bis 30 Gew.-Teile der Fließverbesserer auf Basis von Methacrylsäureestern,

f) 0 bis 300 Gew.-Teile Schlagzähigkeitsverbesserer auf Basis von Methacrylat/Butadien/Styrol-Mischpolymerisaten,

g) 2 bis 10 Gew.-Teile übliche Costabilisatoren, und/oder

h) 0 bis 6,0 Gew.-Teile oxidiertes Polyethylen

4. Ca/Zn-stabilisierte, transparente bis glasklare PVC-Formmassen, enthaltend auf jeweils 100 Gew.-Teile Suspensions- oder Masse-PVC mit K-Werten von 55 bis 63

a) 0,05 bis 0,8, insbesondere 0,1 bis 0,5 Gew.-Teile Ca-Salze geradkettiger, gesättigter $C_8$-$C_{34}$-Fettsäuren, berechnet als Ca-behenat,

b) 0,03 bis 0,2, insbesondere 0,06 bis 0,12 Gew.-Teile Zn-Salze von geradkettigen oder verzweigten, gesättigten $C_8$-$C_{18}$-Fettsäuren, berechnet als Zn-octoat,

c) 2 bis 8, insbesondere 3 bis 6 Gew.-Teile epoxidierte Glyceride von ungesättigten geradkettigen $C_{16}$-$C_{22}$-Fettsäuren mit Oxiranzahlen von 6 bis 8 und Jodzahlen von weniger als 5 und

d) 0,5 bis 2,5, insbesondere 1,0 bis 2,0 Gew.-Teile Diester des Ethylenglykols mit $C_{16}$-$C_{18}$-Fettsäuren,

wobei die Ca-Salze gegebenenfalls Partialester gesättigter, geradkettiger $C_{12}$-$C_{34}$-Monocarbonsäuren mit 2 oder mehr als 2 Kohlenstoffatomen und 2 oder mehr als 2 Hydroxylgruppen enthaltenden Polyolen, die im Zahlenmittel mindestens eine freie Hydroxylgruppe aufweisen, und/oder Komplexester aus

I) aliphatischen, cycloaliphatischen und/oder aromatischen Dicarbonsäuren mit 2 bis 22 Kohlenstoffatomen im Molekül,

II) aliphatischen Polyolen mit 2 bis Hydroxylgruppen im Molekül und

III) aliphatischen Monocarbonsäuren mit 12 bis 34 Kohlenstoffatomen im Molekül,

in denen das Molverhältnis der Komponenten I, II und III zueinander etwa

n - 1 : n : nm - 2 (n - 1)

beträgt, wobei n eine ganze Zahl von 2 bis 11 und m die OH-Funktionalität des Polyols darstellt, in Gewichtsverhältnissen von Ca-Salzen zu Partialestern und/oder Komplexestern bis zu 1:4, insbesondere von 1:0,5 bis 1:4, enthalten.

5. Ca/Zn-stabilisierte PVC-Formmassen nach Anspruch 4, enthaltend auf jeweils 100 Gew.-Teile Suspensions- oder Masse-PVC

e) 0,5 bis 2,0, insbesondere 0,8 bis 1,5 Gew.-Teile Fließverbesserer auf Basis von Methacrylsäureestern,

f) 0 bis 15 Gew.-Teile Schlagzähigkeitsverbesserer auf Basis von Methacrylat/Butadien/Styrol-Mischpolymerisaten,

g) 0,1 bis 0,5 Gew.-Teile übliche Costabilisatoren und/oder

h) 0 bis 0,3 Gew.-Teile oxidiertes Polyethylen.

6. Verfahren zur Herstellung von Ca/Zn-stabilisierten, transparenten bis glasklaren PVC-Formmassen, dadurch gekennzeichnet, daß man in 100 Gew.-Teile Suspensions-oder Masse-PVC mit K-Werten von 55 bis 63 die folgenden Zusätze einarbeitet:

a) 0,05 bis 0,8, insbesondere 0,1 bis 0,5 Gew.-Teile Ca-Salze geradkettiger, gesättigter $C_8$-$C_{34}$-Fettsäuren, berechnet als Ca-behenat,

b) 0,03 bis 0,2, insbesondere 0,06 bis 0,12 Gew.-Teile Zn-Salze von geradkettigen oder verzwiegten, gesättigten $C_8$-$C_{18}$-Fettsäuren, berechnet aus Zn-octoat,

c) 2 bis 8, insbesondere 3 bis 6 Gew.-Teile epoxidierte Glyceride von ungesättigten geradkettigen $C_{16}$-$C_{22}$-Fettsäuren mit Oxiranzahlen von 6 bis 8 und Jodzahlen von weniger als 5 und

d) 0,5 bis 2,5, insbesondere 1,0 bis 2,0 Gew.-Teile Diester des Ethylenglykols mit $C_{16}$-$C_{18}$-Fettsäuren,

wobei die Ca-Salze gegebenenfalls Partialester gesättigter, geradkettiger $C_{12}$-$C_{34}$-Monocarbonsäuren mit 2 oder mehr als 2 Kohlenstoffatome und 2 oder mehr als 2 Hydroxylgruppen enthaltenden Polyolen, die im Zahlenmittel mindestens eine freie Hydroxylgruppe aufweisen, und/oder Komplexester aus

I) aliphatischen, cycloaliphatischen und/oder aromatischen Dicarbonsäuren mit 2 bis 22 Kohlenstoffatomen im Molekül,

II) aliphatischen Polyolen mit 2 bis Hydroxylgruppen im Molekül und

III) aliphatischen Monocarbonsäuren mit 12 bis 34 Kohlenstoffatomen im Molekül,

in denen das Molverhältnis der Komponenten I, II und III zueinander etwa

n - 1 : n : nm - 2 (n - 1)

beträgt, wobei n eine ganze Zahl von 2 bis 11 und m die OH-Funktionalität des Polyols darstellt, in Gewichtsverhältnissen von Ca-Salzen zu Partialestern und/oder Komplexestern bis zu 1:4, insbesondere von 1:0,5 bis 1:4, enthalten.

7. Verfahren nach Anspruch 6, dadurch gekennzeichnet, daß man gegebenenfalls die folgenden Zusätze einarbeitet:

e) 0,5 bis 2,0, insbesondere 0,8 bis 1,5 Gew.-Teile Fließverbesserer auf Basis von Methacrylsäureestern,

f) 0 bis 15 Gew.-Teile Schlagzähigkeitsverbesserer auf Basis von Methacrylat/Butadien/Styrol-Mischpolymerisaten,

g) 0,1 bis 0,5 Gew.-Teile übliche Costabilisatoren und/oder

h) 0 bis 0,3 Gew.-Teile oxidiertes Polyethylen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 81, Nr. 8, 26. August 1974, Seite 57, Zusammenfassung Nr. 38571x, Columbus, Ohio, US; & JP-A-73 35 697 (NIPPON OILS AND FATS CO., LTD) 30-10-1973 ----- | 1 | C 08 K 5/04<br>C 08 L 27/06 //<br>(C 08 K 5/04<br>C 08 K 5:09<br>C 08 K 5:09<br>C 08 K 5:10<br>C 08 K 5:15 ) |
| | | | **RECHERCHIERTE SACHGEBIETE (Int. Cl.4)**<br><br>C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 14-07-1989 | SCHUELER D.H.H. |

EPO FORM 1503 03.82 (P0403)